Europäisches Patentamt

European Patent Office

Office européen des brevets

(19)

(11) Veröffentlichungsnummer : **0 529 195 B1**

(12) # EUROPÄISCHE PATENTSCHRIFT

(45) Veröffentlichungstag der Patentschrift :
**16.08.95 Patentblatt 95/33**

(51) Int. Cl.⁶ : **H01C 17/06, H01B 1/08, C01G 55/00**

(21) Anmeldenummer : **92105427.6**

(22) Anmeldetag : **30.03.92**

(54) **Widerstandsmasse zur Herstellung von Dickschicht-Widerständen.**

(30) Priorität : **22.08.91 DE 4127845**

(43) Veröffentlichungstag der Anmeldung :
**03.03.93 Patentblatt 93/09**

(45) Bekanntmachung des Hinweises auf die
Patenterteilung :
**16.08.95 Patentblatt 95/33**

(84) Benannte Vertragsstaaten :
**DE FR GB IT NL**

(56) Entgegenhaltungen :
**EP-A- 0 395 799**
**DE-A- 3 941 283**
**PATENT ABSTRACTS OF JAPAN vol. 13, no.**
**362 (C-625) 14. August 1989 & JP-A-01 119 543**

(73) Patentinhaber : **W.C. Heraeus GmbH**
**Heraeusstrasse 12 - 14**
**D-63450 Hanau (DE)**

(72) Erfinder : **Gora, Frieder**
**Planck-Strasse 18**
**D-63741 Aschaffenburg (DE)**
Erfinder : **Guldner, Karlheinz, Dr.**
**Grundweg 28 a**
**D-97297 Waldbüttelbrunn (DE)**
Erfinder : **Modes, Christina**
**Im Burgfeld 122**
**D-60439 Frankfurt (DE)**

EP 0 529 195 B1

## Beschreibung

Die Erfindung betrifft eine Widerstandsmasse zur Herstellung von Dickschicht-Widerständen, die ein pyrochlorverwandtes Oxid der allgemeinen Formel $M_xM'_y(Pb,Bi)_{2-x-y}Ru_2O_{7-z}$ mit M = Kupfer und/oder Silber, M' = Calcium, Strontium und/oder Barium, $0 \leqq x \leqq 0,6$, $0,1 \leqq y \leqq 1,0$ und $0,1 \leqq z \leqq 1,0$ und eine Glasfritte enthält.

Eine Widerstandsmasse dieser Art ist aus DE 39 14 844 A1 bekannt. Diese Schrift betrifft elektrisch leitfähige pyrochlorverwandte Oxide der allgemeinen Formel $M_xM'_y(Pb,Bi)_{2-x-y}Ru_2O_{7-z}$ mit M = Kupfer und/oder Silber, M' = Calcium, Strontium und/oder Barium, $0 \leqq x \leqq 0,6$, $0,1 \leqq y \leqq 1,0$ und $0,1 \leqq z \leqq 1,0$ und Widerstandspasten, die aus diesen Oxiden, Glasfritten als dielektrischen anorganischen Bindemitteln und organischen Medien als flüssigen Trägern bestehen. Die aus den Widerstandspasten durch Aufdrucken auf zum Beispiel Aluminiumoxid-Substrate und Einbrennen erzeugten Dickschicht-Widerstände zeichnen sich durch kleine HTCR-, CTCR- und ΔTCR-Werte aus (HTCR = "Hot Temperature Coefficient of Resistance", CTCR = "Cold Temperature Coefficient of Resistance", ΔTCR = HTCR - CTCR). Es hat sich jedoch gezeigt, daß diese Werte relativ großen Schwankungen unterliegen und besonders auch von der Einbrenntemperatur beeinflußt werden.

Eine Anorthit-haltige Widerstandsmasse ist aus der JP-A-01 119 543 bekannt geworden.

In EP 0 013 977 B1 werden Widerstandspasten für Dickschicht-Widerstände vorgeschlagen, die neben einem organischen Träger im wesentlichen aus 20 - 75 Gewichts-Teilen einer Pyrochlor-Verbindung der allgemeinen Formel $(M_xBi_{2-x})(M'_yM''_{2-y})O_{7-z}$ mit M = Yttrium, Thallium, Indium, Cadmium, Blei, Kupfer, Seltenerdmetall, M' = Platin, Titan, Chrom, Rhodium, Antimon, M'' = Ruthenium und/oder Iridium, x = 0 - 2, y = 0 - 0,5 und z = 0 - 1, 12 - 75 Gewichts-Teilen eines Glasbindemittels und 2 - 30 Gewichts-Teilen eines temperaturbeständigen feinteiligen Füllstoffes bestehen. Der Füllstoff besitzt einen thermischen Ausdehnungskoeffizienten von 40 - 60 x $10^{-7}$/°C, eine Teilchengröße von 0,1 - 3 Mikrometer und besteht bevorzugt aus Zirkon oder Mullit. Die Widerstandspasten werden auf dielektrische Substrate gedruckt und bei 850 °C (Spitzentemperatur) an Luft eingebrannt. Als Folge des Füllstoff-Zusatzes besitzen die so erhaltenen Dickschicht-Widerstände eine verbesserte Stabilität, das heißt, im Gegensatz zu der sonst beobachteten Widerstandsdrift bleiben die Widerstandswerte nach mechanischer Beanspruchung, wie sie zum Beispiel bei der Widerstandstrimmung mit Laserstrahlen als Folge der plötzlichen Temperaturänderung auftritt, relativ konstant. Als Widerstandstrimmung wird die genaue Einstellung des Widerstandswertes nach dem Einbrennen durch Abtragen von Widerstandsmaterial, bis der gewünschte Widerstandswert erreicht ist, bezeichnet (Elektronik-Lexikon, herausgegeben von Ernst Baier, 2. Auflage, 688, Stuttgart, Franck'sche Verlagshandlung, 1982).

Ausgehend von DE 39 14 844 A1, ist es die Aufgabe der Erfindung, eine Widerstandsmasse der eingangs charakterisierten Art zu finden, aus der sich auch bei nichtkonstanten Einbrennbedingungen, besonders bei Abweichungen der Spitzentemperatur, Dickschicht-Widerstände mit relativ einheitlichen Widerstandswerten erzeugen lassen.

Die die Lösung der Aufgabe darstellende Widerstandsmasse ist erfindungsgemäß dadurch gekennzeichnet, daß sie im wesentlichen aus 10 - 80 Gewichts-% pyrochlorverwandtem Oxid, 15 - 85 Gewichts-% Glasfritte und 5 - 20 Gewichts-% feinteiligem Anorthit besteht.

Bevorzugt wird die Widerstandsmasse aus 10 - 45 Gewichts-% pyrochlorverwandtem Oxid, 50 - 85 Gewichts-% Glasfritte und 5 - 15 Gewichts-% feinteiligem Anorthit.

Besonders bewährt hat sich die Widerstandsmasse, wenn der Anorthit eine mittlere Teilchengröße von 0,5 - 1 Mikrometer und eine spezifische Oberfläche von etwa 10 - 20 m²/g, bestimmt nach der BET-Methode, aufweist. Anorthit ist ein Calciumaluminiumsilicat der Formel $CaO . Al_2O_3 . 2 SiO_2$. Für die Widerstandsmasse wird synthetischer Anorthit bevorzugt.

Für die Herstellung von hochohmigen Dickschicht-Widerständen (etwa 1 - 100 MΩ) mit positiven HTCR-Werten hat es sich als günstig erwiesen, wenn das pyrochlorverwandte Oxid der angegebenen allgemeinen Formel mit x = 0, $0,4 \leqq y \leqq 1,0$ und $0,1 \leqq z \leqq 1,0$ entspricht und das stöchiometrische Verhältnis von Blei zu Wismut zwischen 1 und 2 liegt.

Das pyrochlorverwandte Oxid kann, wie an sich bekannt (siehe zum Beispiel EP 0 110 167 B1), durch Festkörperreaktion oder durch Reaktion in flüssiger Phase hergestellt werden. Besonders bewährt hat es sich, die entsprechenden Metalle, Metalloxide, Metallcarbonate oder Mischungen daraus in Pulverform als Ausgangsstoffe einzusetzen und diese an Luft bei etwa 700 - 1000 °C zu glühen.

Die Glasfritte, die neben dem pyrochlorverwandten Oxid und dem feinteiligen Anorthit die Widerstandsmasse gemäß der Erfindung bildet, kann irgendeine der in der Dickschichttechnik für einbrennbare Widerstandsmassen benutzten Glasfritten sein. Als besonders günstig haben sich jedoch Bleialumosilicat-Glasfritten und Bleialumoborosilicat-Glasfritten, vorzugsweise solche aus 50 - 70 Gewichts-% PbO, 25 - 35 Gewichts-% $SiO_2$, 1 - 10 Gewichts-% $Al_2O_3$ und 1 - 10 Gewichts-% $B_2O_3$, erwiesen.

Die Widerstandsmasse wird üblicherweise zusammen mit einem organischen Medium als flüssigem Trä-

2

ger verwendet und liegt dann in Form einer Paste vor, die zum Beispiel im Siebdruck-Verfahren auf die dielektrischen Substrate aufgebracht werden kann. Der flüssige Träger besteht meist aus einer Lösung eines organischen Polymers, zum Beispiel aus Acrylharz oder Äthylcellulose, in einem organischen Lösungsmittel, zum Beispiel Terpineol oder Butylcarbitol (Butyldiglykolacetat). Die Widerstandspaste wird in bekannter Weise durch Vermischen der sie bildenden Bestandteile hergestellt. Nach dem Aufdrucken der Paste auf die zum Beispiel aus Aluminiumoxid bestehenden Substrate und dem Trocknen der Paste durch Verdampfen des Lösungsmittels werden die bedruckten Substrate an Luft bei etwa 700 - 900 °C (Spitzentemperatur) eingebrannt.

Überraschenderweise führt die Anwesenheit des feinteiligen Anorthits in der Widerstandsmasse zu einer hohen Toleranz gegenüber den Einbrennbedingungen, besonders der Einbrenntemperatur, speziell der Spitzentemperatur. So werden auch bei Schwankungen der Einbrennbedingungen, wie sie in der Praxis auftreten, Dickschicht-Widerstände mit relativ einheitlichen Widerstandswerten erhalten. Der Anorthit bewirkt eine erhöhte Viskosität der Glasschmelze und - dadurch bedingt - die Formbeständigkeit der Widerstandsmasse während des Einbrennens und die homogene Verteilung des pyrochlorverwandten Oxids in der Glasphase.

Außerdem erhöht der Anorthit die Thixotropie der zusammen mit dem flüssigen Träger in Pastenform vorliegenden Widerstandsmasse und verbessert damit die Druckeigenschaften der Paste; beim Aufdrucken der Paste auf die Substrate lassen sich die gewünschten Schichtdicken mit größerer Genauigkeit erhalten.

Die aus der anorthithaltigen Widerstandsmasse erzeugten Dickschicht-Widerstände zeichnen sich weiter durch eine hohe Stabilität des Widerstandes nach der Widerstandstrimmung mit einem Laserstrahl aus. Die als Widerstandsdrift bezeichnete fortdauernde Änderung des Widerstandes nach der Lasertrimmung ist gering. Vermutlich sind durch den Anorthit-Gehalt die thermischen Ausdehnungskoeffizienten von eingebrannter Widerstandsschicht und Substrat einander so angeglichen, daß die Bildung und Ausbreitung von Mikrorissen, die sonst infolge der Temperaturbelastung bei der Lasertrimmung auftreten, praktisch unterbleiben.

Zur näheren Erläuterung werden in den folgenden Beispielen die Zubereitung von anorthithaltigen und - zum Vergleich - von ähnlich zusammengesetzten, jedoch keinen Anorthit enthaltenden Widerstandspasten und die Herstellung von Dickschicht-Widerständen daraus beschrieben.

Zur Charakterisierung der erfindungsgemäßen Widerstandsmasse werden der Flächenwiderstand $R°_f[M\Omega/\square]$ und der Temperaturkoeffizient des Widerstandes in Abhängigkeit von der Einbrenntemperatur, die Genauigkeit der Schichtdicken und die Stabilität des Widerstandes nach Widerstandstrimmung der aus den Pasten gemäß den Beispielen hergestellten Dickschicht-Widerstände bestimmt.

## Beispiel 1 (Vergleichsbeispiel)

Eine Mischung aus 29 Gewichts-% $Ba_{0,6}Cu_{0,3}Pb_{0,6}Bi_{0,5}Ru_2O_{7-z}$ und 71 Gewichts-% einer Glasfritte aus 62 Gewichts-% PbO, 29 Gewichts-% $SiO_2$, 6 Gewichts-% $Al_2O_3$ und 3 Gewichts-% CdO mit einer mittleren Teilchengröße von 4 Mikrometer und eine 10prozentige Lösung von Äthylcellulose in Butylcarbitol werden im Verhältnis 3 : 1 auf einem Walzenstuhl zu einer Paste verarbeitet. Die Paste wird durch ein Edelstahl-Sieb (200 mesh) auf 50 x 50 x 0,63 Millimeter große $Al_2O_3$-Substrate gedruckt, 10 Minuten lang an Luft bei 150°C getrocknet und dann in einem Durchlaufofen 10 Minuten lang bei Spitzentemperaturen von 840, 850, 860 °C eingebrannt (Verweilzeit im Ofen insgesamt eine Stunde). Auf jedem Substrat befinden sich insgesamt 16 einzelne Dickschicht-Widerstände in einer Größe von 1,5 x 1,5 Millimeter.

## Beispiel 2

Eine Mischung aus 31 Gewichts-% $Ba_{0,6}Cu_{0,3}Pb_{0,6}Bi_{0,5}Ru_2O_{7-z}$, 60,4 Gewichts-% einer Glasfritte aus 62 Gewichts-% PbO, 29 Gewichts-% $SiO_2$, 6 Gewichts-% $Al_2O_3$ und 3 Gewichts-% CdO mit einer mittleren Teilchengröße von 4 Mikrometer und 8,6 Gewichts-% Anorthit mit einer mittleren Teilchengröße von 0,9 Mikrometer und einer BET-Oberfläche von 13,5 $m^2$/g und eine 10prozentige Lösung von Äthylcellulose in Butylcarbitol werden im Verhältnis 3 : 1 auf einem Walzenstuhl zu einer Paste verarbeitet. Die Paste wird durch ein Edelstahl-Sieb (200 mesh) auf 50 x 50 x 0,63 Millimeter große $Al_2O_3$-Substrate gedruckt, 10 Minuten lang an Luft bei 150 °C getrocknet und dann in einem Durchlaufofen 10 Minuten lang bei Spitzentemperaturen von 840, 850 und 860°C eingebrannt (Verweilzeit im Ofen jeweils insgesamt 1 Stunde). Auf jedem Substrat befinden sich insgesamt 16 einzelne Dickschicht-Widerstände in einer Größe von 1,5 x 1,5 Millimeter.

## Beispiele 3 bis 13

Mischungen aus pyrochlorverwandtem Oxid und Glasfritte (Vergleichsbeispiele 3, 5, 7, 10 und 12) und aus pyrochlorverwandtem Oxid, Glasfritte und Anorthit (Beispiele 4, 6, 8, 9, 11 und 13) der in der Tabelle I angegebenen Zusammensetzung werden, wie in den Beispielen 1 und 2 beschrieben, zu Pasten verarbeitet. Die Pasten nach den Beispielen 3 bis 8 werden durch ein Edelstahl-Sieb (200 mesh) auf 50 x 50 x 0,63 Millimeter große $Al_2O_3$-Substrate gedruckt, 10 Minuten lang an Luft bei 150 °C getrocknet und dann in einem Durchlaufofen 10 Minuten lang bei Spitzentemperaturen von 840, 850 und 860 °C eingebrannt (Verweilzeit im Ofen jeweils insgesamt 1 Stunde). Auf jedem Substrat befinden sich insgesamt 16 einzelne Dickschicht-Widerstände in einer Größe von 1,5 x 1,5 Millimeter.

## Tabelle I

| Beispiel | Oxid [Gewichts-%] A | B | C | Glasfritte [Gewichts-%] I | II | III | Anorthit [Gewichts-%] |
|---|---|---|---|---|---|---|---|
| 1* | 29 | | | 71 | | | |
| 2 | 31 | | | 60,4 | | | 8,6 |
| 3* | 25 | | | | 75 | | |
| 4 | 33 | | | | 60,8 | | 6,2 |
| 5* | | 22 | | | | 78 | |
| 6 | | 28 | | | | 60 | 12,0 |
| 7* | | | 21 | | | 79 | |
| 8 | | | 28 | | | 61,9 | 10,1 |
| 9 | 28 | | | 60,3 | | | 11,7 |
| 10* | | 22 | | | | 78 | |
| 11 | | 19 | | | | 73,8 | 7,2 |
| 12* | | | 21 | | | 79 | |
| 13 | | | 25 | | | 61,8 | 13,2 |

*) Vergleich

A = $Ba_{0,6}Cu_{0,3}Pb_{0,6}Bi_{0,5}Ru_2O_{7-z}$

B = $Ca_{0,8}Pb_{0,8}Bi_{0,4}Ru_2O_{7-z}$

C = $Ca_{0,85}Cu_{0,25}Pb_{0,5}Bi_{0,4}Ru_2O_{7-z}$

I = Glasfritte aus 62 Gewichts-% PbO, 29 Gewichts-% $SiO_2$, 6 Gewichts-% $Al_2O_3$ und 3 Gewichts-% CdO

II = 57 Gewichts-% PbO, 38 Gewichts-% $SiO_2$ und 5 Gewichts-% $Al_2O_3$

III = Glasfritte aus 63 Gewichts-% PbO, 31 Gewichts-% $SiO_2$, 4 Gewichts-% $Al_2O_3$ und 2 Gewichts-% $B_2O_3$

Flächenwiderstand und Temperaturkoeffizient des Widerstandes

Der auf eine Schichtdicke von 25 Mikrometer bezogene Flächenwiderstand, $R°_f$[M$\Omega$/□], und der ebenfalls auf eine Schichtdicke von 25 Mikrometer bezogene Temperaturkoeffizient des Widerstandes im Bereich von +25°C bis +125°C, HTCR [ppm/K], der entsprechend den Beispielen 1 bis 8 hergestellten Dickschicht-Widerstände werden in der Tabelle II angegeben. Die anorthithaltigen Widerstandspasten beziehungsweise die daraus hergestellten Dickschicht-Widerstände zeichnen sich - wie ein Vergleich der $R°_f$- und HTCR-Werte zeigt - durch eine größere Toleranz gegenüber Schwankungen der Einbrenntemperatur (Spitzentemperatur) aus.

Genauigkeit der Schichtdicken

Als Maß für die Genauigkeit der Schichtdicken sowohl der aufgedruckten Schichten als auch der eingebrannten Widerstandsschichten wird die Abweichung des Flächenwiderstandes der 16 Einzelwiderstände eines Substrates von $R°_f$, bezogen auf $R°_f$, bestimmt. In der Tabelle II wird die mittlere Abweichung als Varianz [%] angegeben. Wie ein Vergleich zeigt, stimmen die Schichtdicken der anorthithaltigen Schichten recht gut miteinander überein, während die der anorthitfreien Schichten stärker voneinander abweichen.

## Tabelle II

| Beispiel | $R°_f$ [M$\Omega$/□] | | | HTCR [ppm/K] | | | Varianz [%] |
|---|---|---|---|---|---|---|---|
| | 840°C | 850°C | 860°C | 840°C | 850°C | 860°C | |
| 1* | 3,95 | 1,65 | 0,77 | - 77 | - 42 | - 4 | 7,3 |
| 2 | 0,98 | 0,94 | 0,94 | - 64 | - 54 | - 33 | 4,59 |
| 3* | 0,66 | 0,42 | 0,22 | - 5 | - 25 | - 38 | 10,20 |
| 4 | 1,11 | 1,08 | 1,02 | - 88 | - 82 | - 74 | 2,70 |
| 5* | 0,70 | 0,89 | 1,16 | + 124 | + 101 | + 49 | 24,70 |
| 6 | 0,76 | 0,76 | 0,80 | + 51 | + 47 | + 47 | 2,54 |
| 7* | 1,72 | 2,15 | 2,80 | 0 | - 27 | - 82 | 21,72 |
| 8 | 0,82 | 0,88 | 0,97 | - 55 | - 60 | - 74 | 2,54 |

*) Vergleich

Widerstandstrimmung und Stabilität des Widerstandes

Die Pasten nach den Beispielen 1 und 9 bis 13 werden, wie in Beispiel 1 angegeben, auf $Al_2O_3$-Substrate gedruckt, getrocknet und eingebrannt, wobei die Spitzentemperatur 850 °C beträgt. Auf jedem Substrat befinden sich insgesamt 8 einzelne Dickschicht-Widerstände in einer Größe von 1 x 1 Millimeter. Der auf eine Schichtdicke von 25 Mikrometer bezogene Flächenwiderstand $R°_f$ der Dickschicht-Widerstände wird bestimmt. Dann wird von den Dickschicht-Widerständen mit einem Nd-YAG-Laser Widerstandsmaterial abgetragen, bis der Flächenwiderstand $R_f$ = 1,5 . $R°_f$ beträgt. Die Dickschicht-Widerstände werden anschließend 5 Sekunden lang in ein Lot-Bad (Legierung aus 62 % Zinn, 36 % Blei und 2 % Silber; 230 °C) getaucht. Als Maß für die Stabilität des Widerstandes wird die Differenz zwischen dem nach der Behandlung in dem Lot-Bad gemessenen Flächenwiderstand $R_f$ und dem Flächenwiderstand $R°_f$, bezogen auf $R°_f$, $\Delta R/R°_f$ [%], bestimmt. Wie die Tabelle III zeigt, besitzen die aus den anorthithaltigen Widerstandspasten hergestellten Dickschicht-Widerstände eine deutlich bessere Stabilität als die aus den Widerstandspasten ohne Anorthit hergestellten.

## Tabelle III

| Beispiel | $R°_f$ [M$\Omega$/$\square$] 850°C | $\Delta R/R°_f$ [%] |
|----------|-----------|----------|
| 1* | 2,47 | 4,03 |
| 9 | 1,62 | 0,88 |
| 10* | 0,58 | 2,83 |
| 11 | 1,25 | 0,03 |
| 12* | 2,33 | 0,60 |
| 13 | 0,18 | 0,05 |

\*) Vergleich

**Patentansprüche**

1. Widerstandsmasse zur Herstellung von Dickschicht-Widerständen, die ein pyrochlorverwandtes Oxid der allgemeinen Formel $M_xM'_y(Pb,Bi)_{2-x-y}Ru_2O_{7-z}$ mit M = Kupfer und/oder Silber, M' = Calcium, Strontium und/oder Barium, $0 \leqq x \leqq 0,6$, $0,1 \leqq y \leqq 1,0$ und $0,1 \leqq z \leqq 1,0$ und eine Glasfritte enthält, dadurch gekennzeichnet, daß sie im wesentlichen aus 10 - 80 Gewichts-% pyrochlorverwandtem Oxid, 15 - 85 Gewichts-% Glasfritte und 5 - 20 Gewichts-% feinteiligem Anorthit besteht.

2. Widerstandsmasse nach Anspruch 1, dadurch gekennzeichnet, daß sie aus 10 - 45 Gewichts-% pyrochlorverwandtem Oxid, 50 - 85 Gewichts-% Glasfritte und 5 - 15 Gewichts-% feinteiligem Anorthit besteht.

3. Widerstandsmasse nach Anspruch 1 oder 2, dadurch gekennzeichnet, daß der Anorthit eine mittlere Teilchengröße von 0,5 - 1 Mikrometer besitzt.

4. Widerstandsmasse nach einem der Ansprüche 1 bis 3, dadurch gekennzeichnet, daß der Anorthit eine BET-Oberfläche von 10 - 20 m²/g besitzt.

5. Widerstandsmasse nach einem der Ansprüche 1 bis 4, dadurch gekennzeichnet, daß das pyrochlorverwandte Oxid $Ba_{0,6}Cu_{0,3}Pb_{0,6}Bi_{0,5}Ru_2O_{7-z}$ ist.

6. Widerstandsmasse nach einem der Ansprüche 1 bis 4, dadurch gekennzeichnet, daß das pyrochlorverwandte Oxid $Ca_{0,85}Cu_{0,25}Pb_{0,5}Bi_{0,4}Ru_2O_{7-z}$ ist.

7. Widerstandsmasse nach einem der Ansprüche 1 bis 4, dadurch gekennzeichnet, daß daß das pyrochlorverwandte Oxid der allgemeinen Formel $M_xM'_y(Pb,Bi)_{2-x-y}Ru_2O_{7-z}$ mit M = Kupfer und/oder Silber, M' = Calcium, Strontium und/oder Barium, $x = 0$, $0,4 \leqq y \leqq 1,0$ und $0,1 \leqq z \leqq 1,0$ entspricht und das stöchiometrische Verhältnis von Blei zu Wismut zwischen 1 und 2 liegt.

8. Widerstandsmasse nach Anspruch 7, dadurch gekennzeichnet, daß das pyrochlorverwandte Oxid $Ca_{0,8}Pb_{0,8}Bi_{0,4}Ru_2O_{7-z}$ ist.

9. Widerstandsmasse nach einem der Ansprüche 1 bis 8, dadurch gekennzeichnet, daß die Glasfritte eine

6

EP 0 529 195 B1

Bleialumosilicat-Glasfritte ist.

10. Widerstandsmasse nach einem der Ansprüche 1 bis 8, dadurch gekennzeichnet, daß die Glasfritte eine Bleialumoborosilicat-Glasfritte ist.

11. Widerstandsmasse nach Anspruch 10, dadurch gekennzeichnet, daß die Bleialumoborosilicat-Glasfritte aus 50 - 70 Gewichts-% PbO, 25 - 35 Gewichts-% $SiO_2$, 1 - 10 Gewichts-% $Al_2O_3$ und 1 - 10 Gewichts-% $B_2O_3$ besteht.

12. Widerstandsmasse nach einem der Ansprüche 1 bis 11, dadurch gekennzeichnet, daß sie zusammen mit einem organischen Medium in Pastenform angewandt wird.

**Claims**

1. A resistance material for the manufacture of thick film resistors, which contains a pyrochlore-related oxide of the general formula $M_xM'_y(Pb,Bi)_{2-x-y}Ru_2O_{7-z}$ with M = copper and/or silver, M'= calcium, strontium and/or barium, $0 \leqq x \leqq 0.6$, $0.1 \leqq y \leqq 1.0$ and $0.1 \leqq z \leqq 1.0$ and a glass frit, characterised in that it consists substantially of 10 - 80 % by weight pyrochlore-related oxide, 15 - 85 % by weight glass frit and 5 - 20 % by weight fine-particulate anorthite.

2. A resistance material according to Claim 1, characterised in that it consists of 10 - 45 % by weight pyrochlore-related oxide, 50 - 85 % by weight glass frit and 5 - 15 % by weight fine-particulate anorthite.

3. A resistance material according to Claim 1 or 2, characterised in that the anorthite has a mean particle size of 0.5 - 1 micrometre.

4. A resistance material according to one of Claims 1 to 3, characterised in that the anorthite has a BET surface of 10 - 20 $m^2/g$.

5. A resistance material according to one of Claims 1 to 4, characterised in that the pyrochlore-related oxide is $Ba_{0,6}Cu_{0,3}Pb_{0,6}Bi_{0,5}Ru_2O_{7-z}$.

6. A resistance material according to one of Claims 1 to 4, characterised in that the pyrochlore-related oxide is $Ca_{0,85}Cu_{0,25}Pb_{0,5}Bi_{0,4}Ru_2O_{7-z}$.

7. A resistance material according to one of Claims 1 to 4, characterised in that the pyrochlore-related oxide corresponds to the general formula $M_xM'_y(Pb,Bi)_{2-x-y}Ru_2O_{7-z}$ with M = copper and/or silver, M' = calcium, strontium and/or barium, x = 0, $0.4 \leqq y \leqq 1.0$ and $0.1 \leqq z \leqq 1.0$ and the stoichiometric ratio of lead to bismuth lies between 1 and 2.

8. A resistance material according to Claim 7, characterised in that the pyrochlore-related oxide is $Ca_{0,8}Pb_{0,8}Bi_{0,4}Ru_2O_{7-z}$.

9. A resistance material according to one of Claims 1 to 8, characterised in that the glass frit is a lead alumosilicate glass frit.

10. A resistance material according to one of Claims 1 to 8, characterised in that the glass frit is a lead alumoborosilicate glass frit.

11. A resistance material according to Claim 10, characterised in that the lead alumoborosilicate glass frit consists of 50 - 70 % by weight PbO, 25- 35 % by weight $SiO_2$, 1 - 10 % by weight $Al_2O_3$ and 1 - 10 % by weight $B_2O_3$.

12. A resistance material according to one of Claims 1 to 11, characterised in that it is used in paste form together with an organic medium.

7

**Revendications**

1. Masse résistante pour produire des résistances en couches épaisses, qui contient un oxyde de type pyrochloré de formule générale $M_xM'_y(Pb,Bi)_{2-x-y}Ru_2O_{7-z}$ avec M = cuivre et/ou argent, M' = calcium, strontium et/ou baryum, $O \leqq x \leqq 0,6$, $0,1 \leqq y \leqq 1,0$ et $0,1 \leqq z \leqq 1,0$ et une fritte de verre, caractérisée en ce qu'elle est constituée essentiellement de 10-80 % en poids d'oxyde de type pyrochloré, 15-85 % en poids de fritte de verre et 5-20 % en poids d'anorthite finement divisée.

2. Masse résistante selon la revendication 1, caractérisée en ce qu'elle est constituée de 10-45 % en poids d'oxyde de type pyrochloré, 50-85 % en poids de fritte de verre et 5-15 % en poids d'anorthite finement divisée.

3. Masse résistante selon la revendication 1 ou 2, caractérisée en ce que l'anorthite a une taille moyenne de particules de 0,5-1 $\mu$m.

4. Masse résistante selon l'une des revendications 1 à 3, caractérisée en ce que l'anorthite possède une surface BET de 10-20 m$^2$/g.

5. Masse résistante selon l'une des revendications 1 à 4, caractérisée en ce que l'oxyde de type pyrochloré est le $Ba_{0,6}Cu_{0,3}Pb_{0,6}Bi_{0,5}Ru_2O_{7-z}$.

6. Masse résistante selon l'une des revendications 1 à 4, caractérisée en ce que l'oxyde de type pyrochloré est le $Ca_{0,85}Cu_{0,25}Pb_{0,5}Bi_{0,4}Ru_2O_{7-z}$.

7. Masse résistante selon l'une des revendications 1 à 4, caractérisée en ce que l'oxyde de type pyrochloré de formule générale $M_xM'_y(Pb, Bi)_{2-x-y}Ru_2O_{7-z}$ avec M = cuivre et/ou argent, M' = calcium, strontium et/ou baryum, x = 0, $0,4 \leqq y \leqq 1,0$ et $0,1 \leqq z \leqq 1,0$ et la proportion stoechiométrique du plomb au bismuth est comprise entre 1 et 2.

8. Masse résistante selon la revendication 7, caractérisée en ce que l'oxyde de type pyrochloré est le $Ca_{0,8}Pb_{0,8}Bi_{0,4}Ru_2O_{7-z}$.

9. Masse résistante selon l'une des revendications 1 à 8, caractérisée en ce que la fritte de verre est une fritte de verre à l'aluminosilicate de plomb.

10. Masse résistante selon l'une des revendications 1 à 8, caractérisée en ce que la fritte de verre est une fritte de verre à l'aluminoborosilicate de plomb.

11. Masse résistante selon la revendication 10, caractérisée en ce que la fritte de verre à l'aluminoborosilicate de plomb est constituée de 50-70 % en poids de PbO, 25-35 % en poids de $SiO_2$, 1-10 % en poids de $Al_2O_3$ et 1-10 % en poids de $B_2O_3$.

12. Masse résistante selon l'une des revendications 1 à 11, caractérisée en ce qu'on l'utilise sous forme pâteuse en présence d'un milieu organique.